# EUROPÄISCHE PATENTANMELDUNG

(11) **EP 0 908 993 A2**
(43) Veröffentlichungstag der Anmeldung: **14.04.1999**
(21) Anmeldenummer: 98116058.3
(22) Anmeldetag: 26.08.1998
(51) Int. Cl.: H02G 9/04

(54) **Aufständerungssystem aus glasfaserverstärktem Kunststoff für Kabelkanäle aller Art**

(30) Priorität: 16.09.1997 DE 19740681
(71) Anmelder: Braig, Dieter Otto, 70771 Leinfelden-Echterdingen (DE); Laux, Ernst-Ulrich, 70193 Stuttgart (DE); Stach, Günther Gerhard, 70192 Stuttgart (DE)
(72) Erfinder: Stach, Günther Gerhard, 70192 Stuttgart (DE)
(74) Vertreter: Hoeger, Stellrecht & Partner

(57) **Zusammenfassung**

Die Erfindung betrifft ein Aufständerungssystem aus glasfaserverstärktem Kunststoff zur Verlegung von Kabeln und Kabelkanälen aller Art. Dieses bietet durch die Art der Konstruktion und des Herstellungsmaterials wesentliche Vorteile in Be-zug auf Transport, Handling, Montage, Flexibilität, Wartung, Erdung, Isolierung, Verarbeitbarkeit und damit Wirtschaftlichkeit gegenüber herkömmlichen Syste-men wie z. B. aus Stahl.

## Beschreibung

Die Erfindung betrifft ein Aufständerungssystem aus glasfaserverstärktem Kunststoff und besteht aus Ständer-, Träger- (vorzugsweise als Hohlkammerprofil mit wenigstens einem Querschott) und Winkel- bzw. Klemmprofilen sowie Befestigungselementen. Es kann zur Anbringung von Kabelkanälen aller denkbaren Materialien wie z. B. Beton, Metall, Kunststoff usw. eingesetzt werden. Der Träger kann durch die vorzugsweise Form eines Hohlkammerprofils ohne Querschott auch direkt als Kabelkanal eingesetzt werden (integrierte Trägervariante), wobei die Flanschoberseite dieses Trägers als Deckel zum Einziehen von Kabeln geöffnet und verschlossen werden kann.

Die aufgeständerte Verlegung von Kabelkanälen (z.B. neben Gleiskörpern) findet vor allem dort ihre Anwendung, wo aus Platzmangel die sonst übliche Form der Erdverlegung nicht möglich ist. Dies ist z.B. bei Geländeeinschnitten entlang von steil aufragenden Wänden und Böschungen, auf Dämmen oder bei im Erdreich bereits verlegten Kabeln bzw. Kabelkanälen der Fall.

Die bisher eingesetzten Bauteile für die Aufständerung (Ständer und eventuell auch Verbindungselemente zwischen den Ständern) sind aus Beton oder Stahl. Bei Verwendung von Betonkabelkanälen von ca. 1 m Länge muß wegen des hohen Stückgewichts von ca. 170 kg jeden Meter ein Ständer ins Erdreich gesetzt werden.

Beim Einsatz von Betonständern müssen zunächst aufwendige Erdarbeiten (Aushub) für die Ständer durchgeführt werden. Im Anschluß werden die schweren Teile unter Einsatz entsprechender Hebewerkzeuge in die ausgehobenen Löcher eingesetzt, die Löcher aufgefüllt und der Boden verdichtet. Der hohe Zeitaufwand führt für den Schienennetzbetreiber zu langen Streckensperrzeiten und hohen Kosten. Stahlkonstruktionen haben ein etwas niedrigeres Gewicht als Beton, auf Hebewerkzeuge kann jedoch - vor allem bei den Trägern - auch nicht verzichtet werden.

Aufgrund der elektrischen Leitfähigkeit von Stahl müssen die Ständer und Trägerelemente jedoch in vorgegebenen Abständen geerdet und isoliert werden. Außerdem sind an den Verschraubungsstellen zwischen Ständer und Träger Beschädigungen der Teile nicht zu vermeiden. Selbst bei Einsatz von Edelstahlteilen müssen diese Stellen immer wieder nachbehandelt werden, um ein Verrosten zu verhindern.

Die Aufgabe der Erfindung ist es, eine Aufständerungsform zu schaffen die gegenüber den bisherigen Lösungen erhebliche Vorteile in Bezug auf Gewicht der Einzelteile, Verarbeitbarkeit, Haltbarkeit, Verlegung und Montage der Systemkomponenten und damit ihrer Wirtschaftlichkeit insgesamt aufweist.

Die Aufgabe wird erfindungsgemäß durch ein Aufständerungssystem gemäß einem der Ansprüche 1-19 gelöst, wobei alle Systemelemente aus einem glasfaserverstärkten, nicht stromleitenden Kunststoff bestehen. Vorteilhafterweise ist das Ständerprofil zum Teil, jedoch nicht in seiner vollen Länge ins Erdreich eingeführt und besitzt an seinem oberen, nicht eingegrabenen Ende Bohrlöcher. Da sowohl die Winkel- bzw. Klemm-, als auch die Trägerprofile vorzugsweise an ihren Enden ebenfalls Bohrlöcher aufweisen, können die Systembestandteile sehr einfach durch Schraub-, Steck- bzw. Klemmelemente miteinander verbunden werden.

Alle Systemelemente besitzen eine extrem hohen Stabilität, die beispielsweise durch eine überwiegend längs zum Profil verlaufende Glasfaserstruktur erreicht wird.

Eine weitere Ausbildung der Erfindung besteht darin, daß der glasfaserverstärkte Kunststoff ein auf der Basis von Isopolyesterharz mit einer Hülle aus Glasfaserrovings/-matten verstärkter Faserverbundstoff ist.

Aus diesem Grund können die Ständerprofile vorteilhafterweise unter Verzicht auf vorhergehende Erdaushubarbeiten mit geringem Zeitaufwand unter Verwendung von speziell an die Profilform angepaßtem Werkzeug maschinell in das Erdreich gerammt werden.

Zweckmäßigerweise muß das Ständerprofil vor dem Einrammen ins Erdreich an seiner Unterseite nicht speziell bearbeitet werden.

Es ist möglich, die Bohrlöcher an allen Systembestandteilen als Längslöcher auszubilden, sodaß eine horizontale Verschiebung der Trägerprofile zum Ausgleich der durch leicht seitlich versetzten Ständer entstanden Toleranzen gewährleistet ist.

Sinnvollerweise sind diese Bohrlöcher auch so geformt, daß Höhendifferenzen zwischen zwei Ständern ebenfalls ausgeglichen werden können.

Das Aufständerungssystem eignet sich vorteilhalterweise für die Anbringung von Kabelkanälen aller Art. Der Träger selbst kann durch seine Form (vorzugsweise als Hohlkammerprofil ohne Querschott) auch direkt als Kabelkanal eingesetzt werden (integrierte Trägervariante), wobei die Flanschoberseite dieses Trägers als Deckel zum Einziehen von Kabeln geöffnet und verschlossen werden kann.

Besonders vorteilhaft ist es, daß der Abstand zwischen zwei Ständerprofilen trotz einer hohen Flächenlast pro Meter mehrere Meter bei geringer Durchbiegung des Trägerprofils betragen kann, wodurch der Aufwand für das Setzen der Ständer gegenüber den bisherigen Systemen deutlich verringert wird.

Das verwendete Material läßt durch Schneiden z. B. mit einer Flexmaschine eine einfache Veränderung von Form und Länge aller Systemteile zu.

Dadurch können beispielsweise die Trägerprofile zur horizontalen Umgehung von Hindernissen so geschnitten werden, daß sie in beliebigen Winkeln hintereinander auf ein Ständerprofil aufgelegt und unter Einsatz der Winkel- bzw. Klemmprofile sowie Steck-, Schraub- bzw. Klemmelementen mit dem Ständerprofil verbunden werden.

Vorteilhafterweise kann das Trägerprofil an einem Ende auf dem Boden aufliegen und mit Hilfe der Winkel- bzw. Klemmprofile und den Schraub-, Steck bzw. Klemmelementen an seinem anderen Ende mit dem oberen Ende des Ständerprofils verbunden werden.

Bei Anbringung von Kabelkanälen auf den Trägerprofilen (vorzugsweise Trägerprofile als Hohlkammerprofile mit wenigstens einem Querschott) ist die Befestigung mit Hilfe von Schraub-, Steck- bzw. Klemmelementen an jedem beliebigen Punkt des Trägerprofils möglich.

Durch die Ausformung des Trägerprofils vorzugsweise als Hohlkammerprofil ohne Querschott kann der Träger selbst als Kabelkanal eingesetzt werden (integrierte Trägervariante), wobei die Flanschoberseite dieses Trägers als Deckel zum Einziehen von Kabeln geöffnet und verschlossen werden kann.

Alle Bestandteile des Aufständerungssystems sind vorteilhafterweise recyclebar.

Alle Bestandteile des Aufständerungssystems sind vorteilhafterweise halogenfrei.

Alle Bestandteile des Aufständerungssystems sind vorteilhafterweise UV-beständig.

Alle Bestandteile des Aufständerungssystems sind vorteilhafterweise Wärme- und Kältebeständig.

Es ist vorteilhaft, den Kunststoff mit Brandschutzmitteln auszustatten.

Außerdem ist es möglich, durch entsprechende Behandlung des Kußststoffs eine Oberflächenversiegelung zu erreichen, die gegen Feuchtigkeitsaufnahme wirksam ist.

Die Erfindung soll im folgenden an einem Ausführungsbeispiel naher erläutert werden. In der zugehörigen Zeichnung zeigen:
Fig. 1: einen Längsschnitt durch das Aufständerungssystems mit aufgelegten Kabelkanälen
Fig. 2: einen Querschnitt durch ein Ständerprofil längs Linie A-A in Figur 4
Fig. 3: einen Querschnitt durch ein Trägerprofil längs Linie B-B in Figur 4
Fig. 4: einen Querschnitt durch ein Ständerprofil, zwei Winkelprofile, zwei Trägerprofile und zwei Kabelkanäle sowie den zur Befestigung notwendigen Schraub-, Steck bzw. Klemmelementen
Fig. 5: eine Draufsicht auf zwei, mit Schraub-, Steck bzw. Klemmelementen an einem Ständerprofil befestigten Winkelprofilen
Fig. 6: einen Querschnitt durch ein integriertes Trägerprofil ohne Querschott längs Linie B-B in Figur 4
Fig. 7: einen Querschnitt durch ein integriertes Trägerprofil ohne Querschott längs Linie B-B in Figur 4 mit als Deckel nutzbarer Träger-Flanschoberseite
Fig. 8: einen Längsschnitt durch ein integriertes Trägerprofil mit Querschott

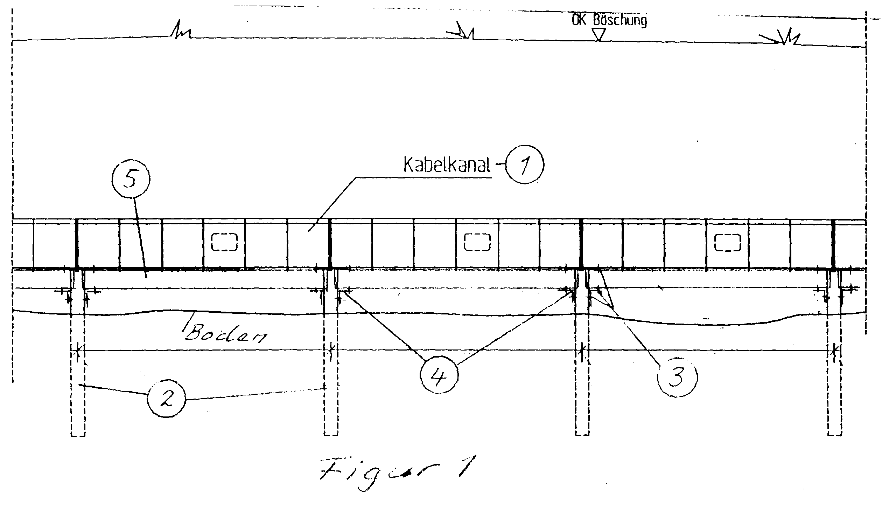

In Fig. 1 wird eine Seitenansicht des Aufständerungssystems mit aufgelegten Kabelkanälen (1) gezeigt. Die Ständerprofile (2) werden z.B. entlang von Gleiskörpern maschinell in das Erdreich eingerammt, wobei aus Gründen der Stabilität ca. 2/3 der Gesamtlänge des Ständerprofils (2) mit speziellen, der Form des Ständerprofils angepaßten Werkzeugen ins Erdreich eingerammt werden. Das Ständerprofil (2) ist an beiden Enden ungefähr gerade, eine Bearbeitung des unteren Endes vor dem Einrammen ins Erdreich ist wegen der extremen Stbilität des verwendeten Kunststoffs auf Isopolyesterbasis mit Glasfaserrovings/- matten und der überwiegend längs zum Profil verlaufenden Faserstruktur zweckmäßigerweise nicht notwendig.

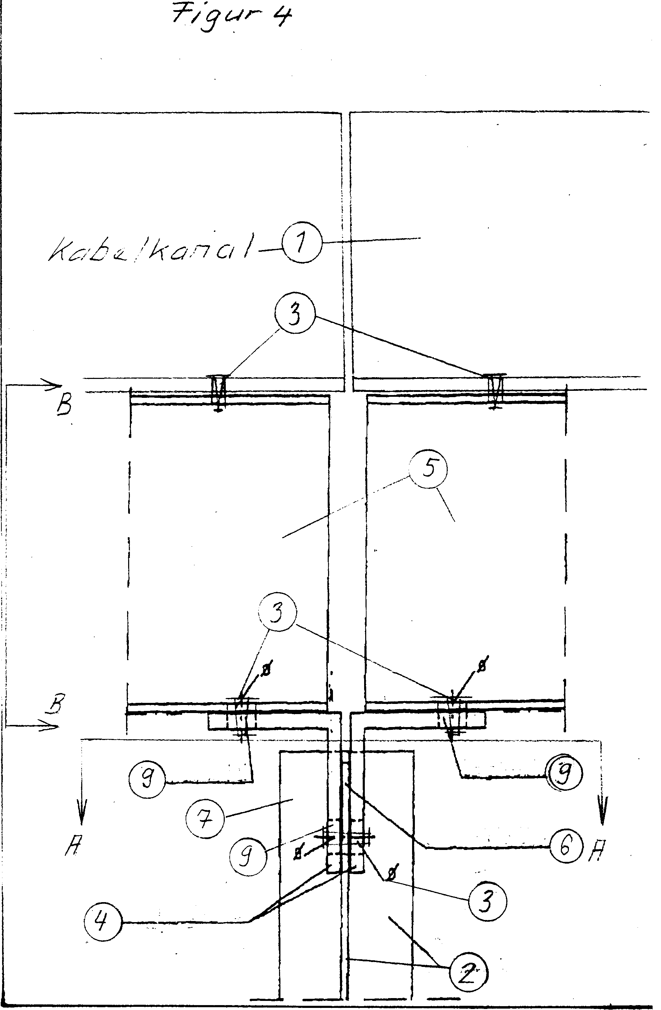

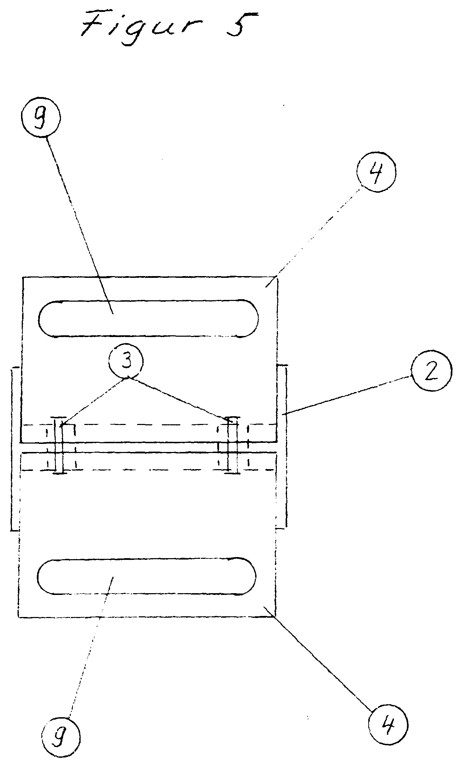

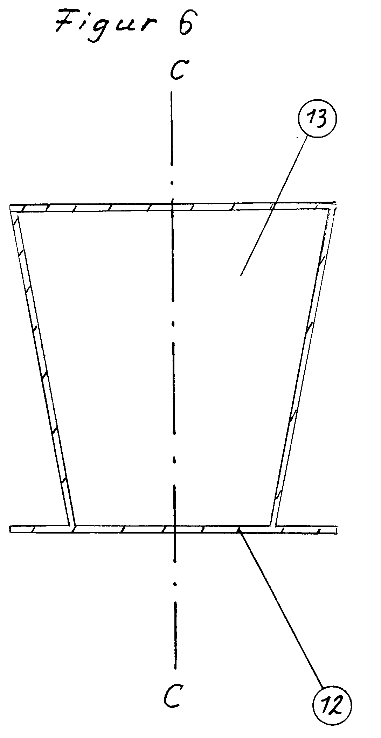

Am oberen Ende des Ständerprofils (2) ist es unter Verwendung von Schraub-, Steck bzw. Klemmelementen (3) möglich, die Winkel- (s. Fig. 4, 5) bzw. Klemmprofile (s. Fig. 6) (hier: 4) als Verbindungsteile zu den Trägerprofilen (5) anzubringen. Auf den ebenfalls mit ungefähr geraden Enden versehenen Trägerprofile (5) liegen, die z.B. mit Schraub-, Steck- bzw. Klemmelementen (3) befestigten Kabelkanäle (1).

Aufgrund der hohen Stabilität des eingesetzten Materials können vorteilhafterweise auch bei einer relativ hohen Flächenbelastung der Trägerprofile (5) recht große Distanzen zwischen den Ständerprofilen (2) bei geringer Durchbiegung der Trägerprofile (5) überbrückt werden.

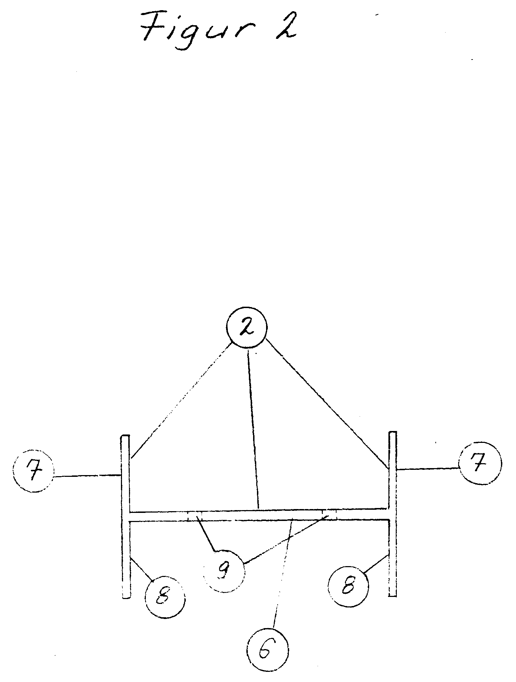

Fig. 2 zeigt einen Querschnitt durch ein Ständerprofil (2) längs Linie A-A in Figur 4. Das Ständerprofil (2) hat beispielsweise die Form eines Doppel-T-Trägers, wobei der Verbindungssteg (6) zwischen den Außenwänden (7) ungefähr rechtwinklig auf den Außenwänden (7) angeformt ist.

Die beiden, dem Verbindungssteg (6) zugewandten Innenseiten (8) der Außenwände (7) können in einem beliebigen Abstand ungefähr parallel zur ungefähr geraden Außenwand (7) verlaufen.

Am oberen Ende des Ständerprofils (2) sind zweckmäßigerweise Bohrlöcher in Form von Längslöchern (9) im Verbindungssteg (6) angebracht, die eine vertikale Verschiebung der dort mit Schraub-, Steck bzw. Klemmelementen (3) anzubringenden Winkelprofile (4) ermöglichen. Dadurch ist der Ausgleich von Höhendifferenzen zwischen zwei Ständerprofilen (2) möglich.

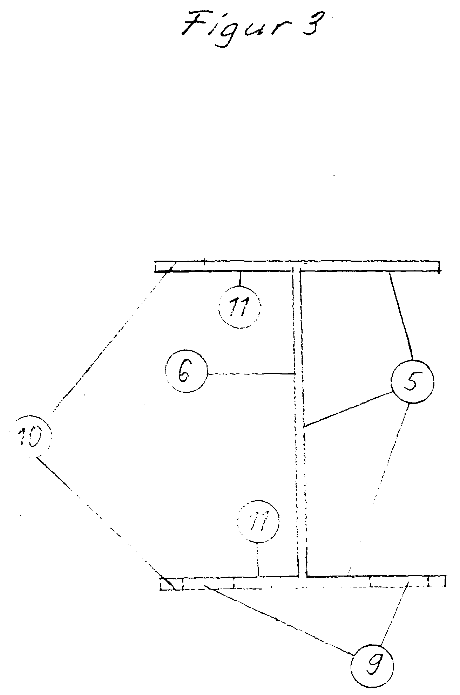

Fig. 3 zeigt einen Querschnitt durch ein Trägerprofil (5) längs Linie B-B in Figur 4. Das Trägerprofil (5) hat beispielsweise die Form eines Doppel-T-Trägers, wobei der Verbindungssteg (6) zwischen den Außenwänden (10) ungefähr rechtwinklig auf den Außenwänden (10) angeformt ist.

Die beiden dem Verbindungssteg (6) zugewandten Innenseiten (11) der Außenwände (10) können in einem beliebigen Abstand ungefähr parallel zur ungefähr geraden Außenwand (10) verlaufen.

In der unteren Außenwand an beiden Enden des Trägerprofils (5) können ungefähr rechtwinklig zum Verbindungssteg (6) zwischen den Außenwänden (10) des Trägerprofils (5) Bohrlöcher in Form von Längslöchern (9) angebracht sein. Diese Längslöcher (9) ermöglichen eine horizontale Verschiebung der Trägerprofile (5) auf den am oberen Ende der Ständerprofile (2) befestigten Winkelprofilen (4), (siehe Fig. 4). Dadurch ist es möglich, Seitendifferenzen zwischen zwei Ständerprofilen (2) auszugleichen.

In Fig. 4 ist ein Querschnitt durch ein Ständerprofil (2), zwei Winkelprofile (4), zwei Trägerprofile (5) und zwei Kabelkanäle (1) sowie den zur Befestigung notwendigen Schraub-, Steck- bzw. Klemmelementen (3) dargestellt. Hier ist ersichtlich, daß die Winkelprofile (4) vorteilhafterweise in beiden ungefähr rechtwinklig aneinander geformten Schenkeln ebenfalls Bohrlöcher in Form von Längslöchern (9) (siehe auch Fig 5), aufweisen. Die beiden Winkelprofile (4) sind am oberen Ende des Ständerprofils (2) auf beiden Seiten des Verbindungssteges (6) zwischen den Außenwänden (7) des Ständerprofils (2) mit Schraub-, Steck- bzw. Klemmelementen (3) mit dem Ständerprofil (2) verbunden. Gleichzeitig werden die beiden anderen Schenkel der Winkelprofile (4) ebenfalls durch Schraub-, Steck- bzw. Klemmelementen (3) mit den auf ihnen liegenden Trägerprofilen (5) verbunden. Auf den Trägerprofilen (5) wiederum werden z.B. mit Schraub-, Steck- bzw. Klemmelementen (3) die Kabelkanäle (1) befestigt.

In Fig. 5 sieht man eine Draufsicht auf zwei mit Schraub- bzw. Steckelementen (3) an einem Ständerprofil (2) befestigten Winkelprofilen (4). Die beiden zweckmäßigerweise als Längslöcher ausgebildeten Bohrlöcher (9) in den nicht mit dem Ständerprofil (2) verbundenen Schenkeln der Winkelprofile (4) ermöglichen eine mit Schraub-, Steck- bzw. Klemmelementen (3) durchführbare Verbindung mit den Trägerprofilen (5) (siehe Fig. 4) und deren horizontale Verschiebung.

Fig. 6 zeigt im Querschnitt B-B der Fig. 4 die beispielhafte Ausformung eines Trägerprofils (12) vorzugsweise als Hohlkammerprofil (13) ohne Querschott. Dadurch kann der Träger selbst als Kabelkanal eingesetzt werden (integrierte Trägervariante).

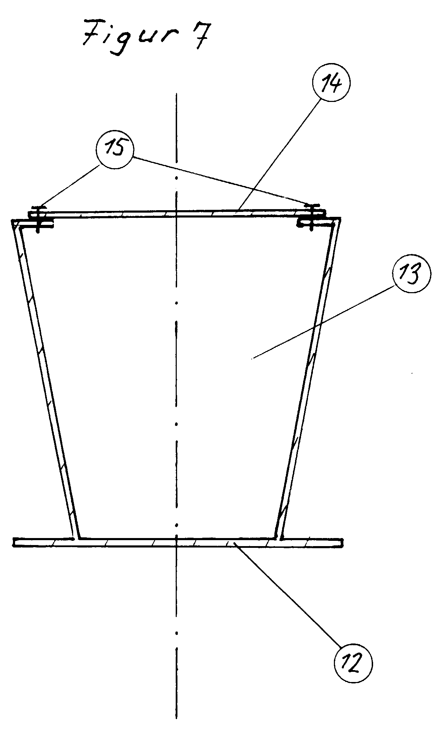

Fig. 7 zeigt die integrierte Trägervariante (12) als Hohlkammerprofil (13) ohne Querschott aus Fig. 6, wobei die Flanschoberseite (14) dieses Trägers als Deckel zum Einziehen von Kabeln geöffnet und beispielsweise mit Schrauben (15) verschlossen werden kann.

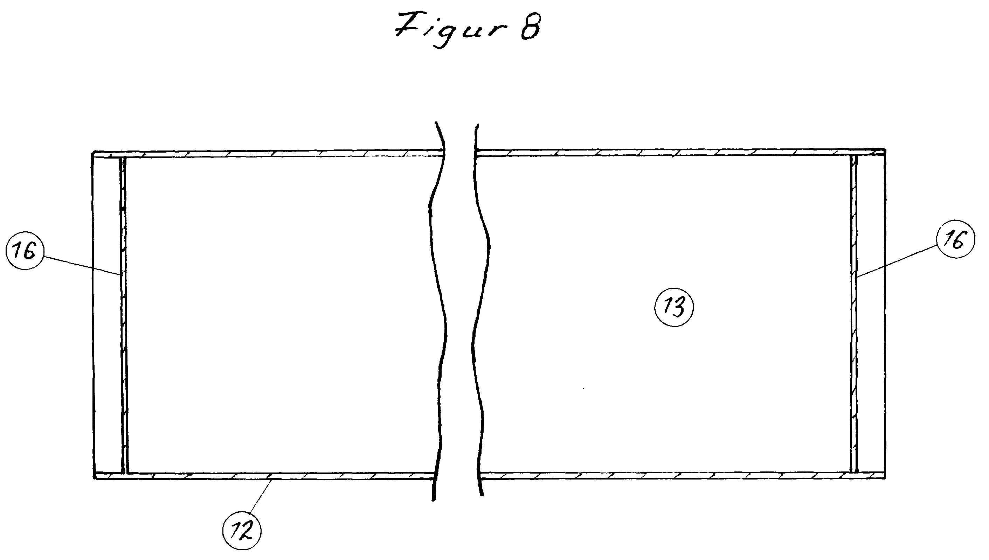

Fig. 8 zeigt im Längsschnitt C-C aus Fig. 6 die bei großen Lasten beispielhafte Ausformung des Trägerprofils (12) vorzugsweise als Hohlkammerprofil (13) mit wenigstens einem Querschott (16), das das Profil noch verwindungssteifer macht.

## Patentansprüche

1. Aufständerungssystem für Kabelkanäle bestehend aus einem Ständerprofil, einem Trägeprofil sowie Winkel- bzw. Klemmprofilen als Verbindungselemente zwischen Ständern und Trägern, dadurch gekennzeichnet, daß das Ständerprofil teilweise, jedoch nicht in seiner vollen Länge in den Boden eingeführt ist und an seiner Oberseite durch Bohrlöcher mit Hilfe mit Bohrlöchern versehener Winkel- bzw. Klemmprofile mit dem an seinen Enden ebenfalls mit Bohrlöchern versehenen Trägerprofilen unter Verwendung von Schraub-, Steck- bzw. Klemmelementen verbunden wird, wobei durch die Ausformung des Trägerprofils vorzugsweise als Hohlkammerprofil mit und ohne Querschott, im Anwendungsfall ohne Querschott der Träger selbst als Kabelkanal eingesetzt (integrierte Trägervariante) und die Flanschoberseite dieses Trägers als Deckel zum Einziehen von Kabeln geöffnet und verschlossen werden kann, sowie dadurch gekennzeichnet, daß alle Systembestandteile aus einem glasfaserverstärktem, nicht stromleitenden Kunststoff bestehen.

2. Aufständerungssystem für Kabelkanäle gemaß Anspruch 1, dadurch gekennzeichnet, daß der verwendete glasfaserverstärkte Kunststoff eine überwiegend längs zu den Profilen verlaufende Faserstruktur aufweist.

3. Aufständerungssystem für Kabelkanäle gemäß einem oder beiden der vorangegangenen Ansprüche, dadurch gekennzeichnet, daß der glasfaserverstärkte Kunststoff ein Faserverbundstoff auf Basis von Isopolyesterharz mit einer Hülle aus Glasfaserrovings/-matten als Verstärkung ist.

4. Aufständerungssystem für Kabelkanäle gemäß einem oder mehreren der vorangegangenen Ansprüche, dadurch gekennzeichnet, daß die Ständerprofile wegen ihrer extremen Stabilität mit einem an die spezielle Profilform angepaßtem Werkzeug maschinell ins Erdreich gerammt werden können.

5. Aufständerungssystem für Kabelkanäle gemäß einem oder mehreren der vorangegangenen Ansprüche, dadurch gekennzeichnet, daß das Ständerprofil an seinem unteren Ende zum Einrammen ins Erdreich nicht speziell bearbeitet werden muß.

6. Aufständerungssystem für Kabelkanäle gemäß einem oder mehreren der vorangegangenen Ansprüche, dadurch gekennzeichnet, daß die Bohrlöcher an allen Systembestandteilen so geformt sind, daß eine horizontale Verschiebung des Trägerprofils auf den Ständerprofilen möglich ist.

7. Aufständerungssystem für Kabelkanäle gemaß einem oder mehreren der vorangegangenen Ansprüche, dadurch gekennzeichnet, daß die Bohrlöcher an allen Systembestandteilen so geformt sind, daß eine vertikale Verschiebung des Trägerprofils auf den Standerprofilen möglich ist.

8. Aufständerungssystem für Kabelkanäle gemäß einem oder mehreren der vorangegangenen Ansprüche, dadurch gekennzeichnet, daß das Aufständerungssystem für die Anbringung von Kabelkanälen aller Art geeignet ist.

9. Aufständerungssystem für Kabelkanäle gemaß einem oder mehreren der vorangegangenen Ansprüche, dadurch gekennzeichnet, daß der Abstand zwischen zwei Ständerprofilen bei einer hohen Flächenbelastung pro Meter mehrere Meter bei geringer Durchbiegung und Verdrillung des Trägerprofils betragen kann.

10. Aufständerungssystem für Kabelkanäle gemäß einem oder mehreren der vorangegangenen Ansprüche, dadurch gekennzeichnet, daß alle Systembestandteile durch Schneiden in ihrer Form und Länge verändert werden können.

11. Aufständerungssystem für Kabelkanäle gemäß einem oder mehreren der vorangegangenen Ansprüche, dadurch gekennzeichnet, daß die Trägerprofile nach dem Zurechtschneiden in beliebigen Winkeln in der horizontalen Ebene aneinandergefügt und auf die Ständerprofile aufgelegt werden können.

12. Aufständerungssystem für Kabelkanäle gemäß einem oder mehreren der vorangegangenen Ansprüche, dadurch gekennzeichnet, daß ein Trägerprofil so auf das Ständerprofil aufgelegt und durch die Winkel- bzw. Klemmprofile mit Schraub-, Steck- bzw. Klemmelementen verbunden werden kann. daß sein anderes Ende auf dem Boden aufliegt.

13. Aufständerungssystem für Kabelkanäle gemäß einem oder mehreren der vorangegangenen Ansprüche, dadurch gekennzeichnet, daß die Verbindung zwischen Trägerprofil und daraufliegendem Kabelkanal mit Hilfe von Schraub-, Steck- bzw. Klemmelementen an jedem beliebigen Punkt des Trägerprofils stattfinden kann.

14. Aufständerungssystem für Kabelkanäle gemäß einem oder mehreren der vorangegangenen Ansprüche, dadurch gekennzeichnet, daß alle Systembestandteile recyclebar sind.

15. Aufständerungssystem für Kabelkanäle gemäß einem oder mehreren der vorangegangenen Ansprüche, dadurch gekennzeichnet, daß alle Systembestandteile halogenfrei sind.

16. Aufständerungssystem für Kabelkanäle gemäß einem oder mehreren der vorangegangenen Ansprüche, dadurch gekennzeichnet, daß alle Systembestandteile UV-beständig sind.

17. Aufständerungssystem für Kabelkanäle gemäß einem oder mehreren der vorangegangenen Ansprüche, dadurch gekennzeichnet, daß alle Systembestandteile wärme- und kältebeständig sind.

18. Aufständerungssystem für Kabelkanäle gemäß einem oder mehreren der vorangegangenen Ansprüche, dadurch gekennzeichnet, daß der glasfaserverstärkte Kunststoff mit Flammschutzmitteln ausgestattet und selbstverlöschend ist.

19. Aufständerungssystem für Kabelkanäle gemäß einem oder mehreren der vorangegangenen Ansprüche, dadurch gekennzeichnet, daß der Kunststoff gegen eine Feuchtigkeitsaufnahme oberflächenversiegelt ist.
